(19) Europäisches Patentamt

European Patent Office

Office européen des brevets

(11) **EP 1 117 250 A2**

(12) **EUROPEAN PATENT APPLICATION**

(43) Date of publication:
**18.07.2001 Bulletin 2001/29**

(51) Int Cl.$^7$: **H04N 3/15**

(21) Application number: **01100595.6**

(22) Date of filing: **10.01.2001**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **11.01.2000 US 480911**

(71) Applicant: **Agilent Technologies Inc.,
A Delaware Corporation
Palo Alto, CA 94306-2024 (US)**

(72) Inventor: **Borg, Matthew M.
Corvallis, OR 97330 (US)**

(74) Representative: **Schoppe, Fritz, Dipl.-Ing. et al
Schoppe, Zimmermann & Stöckeler,
Patentanwälte,
Postfach 71 08 67
81458 München (DE)**

(54) **Active pixel sensor with improved reference signal**

(57)     An active pixel sensor (APS) circuit (5) in which a reference signal other than ground is used in signal processing. One or more reference pixel cells (20,30,40) are used to generate a reference signal. A reference signal generated from pixel cells more closely approximates the noise and parasitic influences that the exposed pixel cells (4,12) experience. By using more than one pixel for a reference signal, an average photodiode voltage is achieved. Use of this arrangement for improved common mode rejection and dark current suppression is also disclosed.

Fig. 2

**Description**

FIELD OF THE INVENTION

The present invention relates to active pixel sensors and, more specifically, to improved reference signal generation and processing in such sensors.

BACKGROUND OF THE INVENTION

Active pixel sensors (APS) capture digital image data and are often used in digital still cameras, digital video cameras and image copying apparatuses, etc. APSs are typically formed of a plurality of pixel cells that each contain a photo-sensitive diode, commonly referred to as a photo diode.

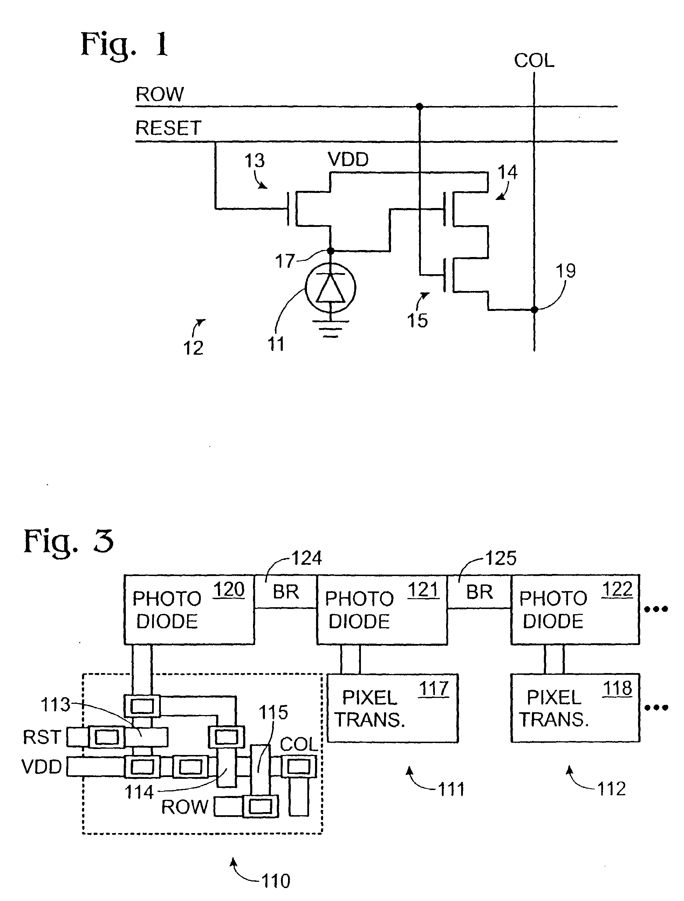

Referring to Fig. 1, a schematic diagram of a representative pixel cell 12 for use in accordance with the present invention is shown. Cell 12 preferably includes three transistors 13-15 (which are typically n-type field-effect transistors) and a light sensitive photo diode 11. Transistors 13 and 14 are coupled to $V_{DD}$ and transistor 15 is coupled to the source of transistor 14. A reset signal is applied to the gate of transistor 13 and a row select signal is applied to the gate of transistor 15.

In a typical mode of operation, the reset line is asserted high to charge the parasitic capacitance of the reversed biased photo diode to a reset level. After the reset level at the photo diode output node 17 has stabilized, the reset line is pulled low, allowing photo induced charge carriers to discharge the photo diode at a rate proportional to incident light intensity. After a specific exposure time, the row select line is asserted high allowing the voltage at node 17 to be sampled at the cell output node 19 (where the column conductor is connected), through source follower buffer transistor 14. The reset signal is again asserted high and low to reset node 17 a second time. The reset level is sampled at output 19. The difference between the voltage level at output 19 after exposure to incident light ($V_{EXPOSURE}$) and at reset ($V_{RESET}$) is proportional to the incident light intensity. $V_{RESET}$ and $V_{EXPOSURE}$ are determined with reference to ground.

To form an APS, a plurality of these pixel cells are provided together preferably in an array. The APS is read by reading the output node of each of the multiple pixel cells. A read is typically conducted by transferring each row of pixel output data to a row buffer and sequentially processing the content of the row buffer for each row.

While beneficial for capturing image data, current APS devices are also disadvantageous, for example, in that the photo diode output values are normally determined with reference to ground. Problems associated with this practice include that photo diode output signals and ground signals are subjected to different noise levels and other inequitable influences. As a result, the photo diode output signals (determined with ground as a reference) will tend to have a significant noise component, resulting in a less accurate recording of incident light and lower quality image reproduction.

SUMMARY OF THE INVENTION

Accordingly, it is an object of the present invention to provide an APS that utilizes a reference signal that more accurately compensates for noise and other influences to which pixel cells are subjected.

It is also an object of the present invention to provide an APS that creates the desired reference signal using similarly situated pixel cells.

These and related objects of the present invention are achieved by use of an active pixel sensor with improved reference signal as described herein.

In one embodiment, the present invention includes an array of exposable pixel cells and a reference signal generating circuit that utilizes one or more reference pixel cells in generating the reference signal. The reference pixel cells are preferably formed in a manner similar to the exposable pixel cells to thereby reflect similar noise and parasitic influences.

The reference pixel cells may be provided in an array adjacent to the exposed array or in another arrangement. One or more reference pixel cells may be provided for each row of the exposed array. When a plurality of reference pixel cells is provided at least some of their photo diodes are preferably connected together to produce an average photo diode output voltage. The reference pixel cells are preferably covered by an opaque filter or like material.

The attainment of the foregoing and related advantages and features of the invention should be more readily apparent to those skilled in the art, after review of the following more detailed description of the invention taken together with the drawings.

BRIEF DESCRIPTION OF THE DRAWINGS

Fig. 1 is a schematic diagram of a representative pixel cell for use in an active pixel sensor (APS) of the present invention.

Fig. 2 is a schematic diagram of an active pixel array with column readout circuitry in accordance with the present invention.

Fig. 3 is a diagram of integrally shorted photo diodes in accordance with the present invention.

DETAILED DESCRIPTION

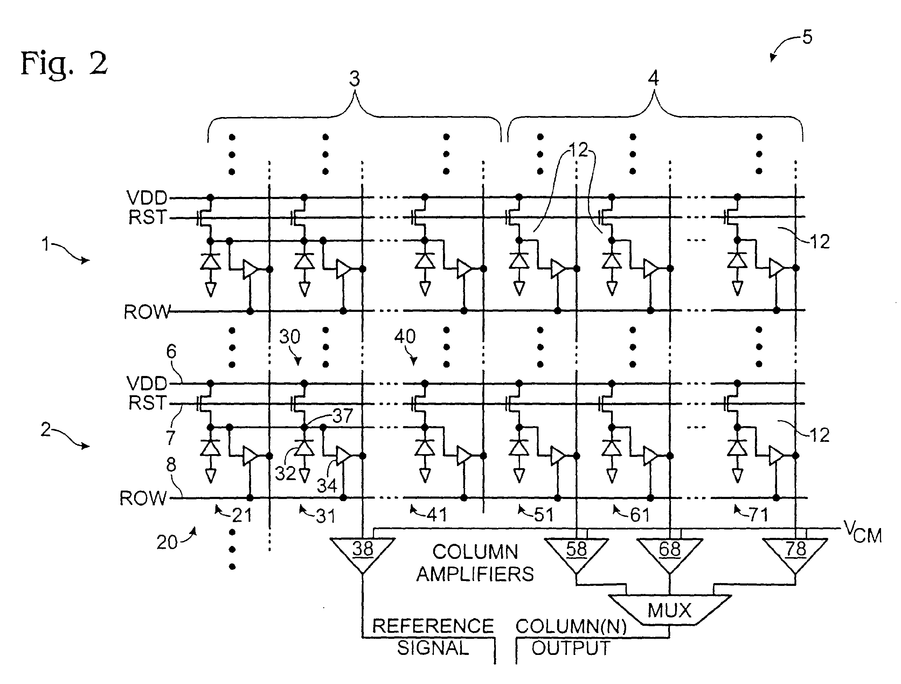

Referring to Fig. 2, a schematic diagram of an active pixel sensor (APS) 5 in accordance with the present invention is shown. It should be noted that Fig. 2 actually discloses an active pixel array with column readout circuit. Row decode and the like is not shown. Since, however, the APS is substantially shown, that term will be used in the following description.

APS 5 contains a plurality of pixel cells 12 (hereinafter referred to as "pixels") arranged in an N x M array. Typical APS sizes include 640 x 480 (VGA) and 352 x 288 (CIF), and it is anticipated that densities will increase in the future. Portions of two representative rows 1, 2 are shown. It is to be understood that many rows may be provided where the vertical three dot pattern is provided in the figure and that the number of pixels in each row can be increased.

APS 5 may be divided into two sections: "reference" pixels 3 and "exposed" pixels 4. As discussed in more detail below, reference pixels are used to create a reference signal that is compared to output signals from exposed pixels, preferably on a row-by-row basis, to provide a more accurate image data output signal.

Though rows 1 and 2 represent any of the plurality of rows in an APS, row 2 will be used to teach the reference signal generating and processing techniques of the present invention. It is to be understood that the teachings herein for row 2 can be applied to any of the other rows.

Row 2 includes a VDD line 6, a reset (RST) line 7 and a row select line 8. A plurality of columns (though less than all) 21, 31, 41, 51, 61, 71 are shown. Columns 21, 31, 41 (of section 3) are used for reference signal generation, and columns 51, 61, 71 are exposed to incident light for image capture. Each of the columns has a corresponding pixel and each pixel includes a photo diode 22, 32, 42, 52, 62, 72 with respective output node 27, 37, 47, 57, 67, 77.

The pixels of section 3 (20, 30, 40), are intended to be identical to the exposed pixels 50, 60, 70, except that their photo diode output nodes are shorted together (along the pixel row). These pixels (20, 30, 40) are covered with an opaque filter or the like that blocks light.

The column output of one of the reference pixels, for example pixel 30, is provided as a reference signal. This output signal is gated through buffer 34 to a column amplifier 38. The output of each of the columns in the exposed section of the array is similarly gated and fed to a column amplifier 58, 68, 78, respectively. The output of each amplifier is sequentially selected by multiplexer 90 using known select logic, and the output of each section 4 column amplifier is sequentially compared to the reference signal output from amplifier 38 to provide a difference output signal.

The column amplifiers preferably have one output and include a switched capacitor circuit with sample and hold as is known. A common mode voltage ($V_{CM}$) is preferably provided to each amplifier as discussed below. $V_{CM}$ is preferably a DC bias, that augments the value of a photo diode output signal. $V_{CM}$ preferably has a value approximately between the supply rails. It should be recognized that other column amplifier arrangments could be utilized including two output amplifiers that each output signal and reset levels. Double differential signal processing circuits are utilized to process such outputs as is known.

In a preferred embodiment, the exposed column amplifier output signal equals $V_{CM} - (V_{rst} - V_{sig})$, where $V_{rst}$ is pixel reset level and $V_{sig}$ is the pixel signal level after an integration period. $V_{sig}$ includes two components: $V_{sig} = V_{light} + V_{dark}$, where the $V_{light}$ component is due to the integration of photo generated current and the $V_{dark}$ component is due to the integration of leakage, or dark, current. Since the reference pixels are covered with an opaque filter, the $V_{sig}$ for each of the individual reference pixels includes only a dark current component. In this way, the differential output given by the difference of the reference signal and the selected column output is given by:

$$\text{Differential Output}(n) = \text{Reference Signal} - \text{Column}(n)\ \text{Output}$$
$$= V_{CM} - (V_{rst} - V_{dark(avg)}) - [V_{CM} - (V_{rst} - (V_{(light + dark)(n)}))]$$
$$= (V_{rst} - V_{(light + dark)(n)}) - (V_{rst} - V_{dark(avg)})$$
$$(1)$$

By shorting the sense nodes of many reference pixels together, differences in the dark current from pixel to pixel, as well as the shot noise associated with the dark current are averaged out, thereby further minimizing row-wise fixed pattern noise.

There are several benefits of generating a reference signal in this fashion. As demonstrated in equation 1 above, the average dark signal is subtracted from each pixel output, eliminating the need for black level restoration at some other point in the signal path. In addition, the reference photo diodes and exposed photo diodes are fabricated in common process steps and of the same dimensions, and are sampled in an identical fashion. Thus, process induced signal variations are subtracted out of an output signal when compared to this reference signal. Furthermore, the reference photo diodes are exposed to the same noise (VDD bias variations, EMI from row select and reset signal transitions, etc.), and thus this noise is also canceled out.

Hence, by using or by creating a reference signal from similarly situated photo diodes the reference signal is more likely to include the same variations that the exposed photo diodes will experience. When this reference signal is used to obtain a differential output, the shared noise, bias and other signal affecting influences are subtracted from the APS output signal.

It should be recognized that while only one reference pixel could be provided per row, using more than one provides an "average" value. It should also be recognized that while a plurality of reference pixels per row is preferred, providing pixel(s) that are applicable to more than one row (less than a reference pixel per row) is within the present invention. The reference signal may also be generated from a bank of reference pixels spaced from exposed pixel array.

Referring to Fig. 3, a schematic diagram of pixel cells having shorted photo diodes 110-112 in accordance with the present invention is shown. Fig. 3 illustrates a top view of three pixels 110-112 layed out in semiconductive material. Fig. 3 is intended to illustrate that the photo diodes 120-122 and their integral connecting bridges 124-125 are preferably formed in the same process steps. In this manner, the connecting of the adjacent photo diodes of the reference pixels is achieved without additional processing steps and parasitics are reduced.

The diodes may be formed of n-type doped material over p-type doped material or vice versa (to form a p-n junction).

Pixel 110 illustrates a representative layout of pixel cell transistors 113-115 and conductors. The rectangle within rectangle patterns represent conductor junctions. $V_{DD}$, row select, reset and output column conductors are shown. The transistors of pixels 111-112 are represented by transistor blocks 117-118, etc.

While the reference photo diodes are preferably connected together as discussed above (to minimize parasitic capacitance and to eliminate additional process steps), it should be recognized that the photo diodes could be connected by other means, such as by supplemental metallic conductor or other means.

While the invention has been described in connection with specific embodiments thereof, it will be understood that it is capable of further modification, and this application is intended to cover any variations, uses, or adaptations of the invention following, in general, the principles of the invention and including such departures from the present disclosure as come within known or customary practice in the art to which the invention pertains and as may be applied to the essential features hereinbefore set forth, and as fall within the scope of the invention and the limits of the appended claims.

**Claims**

**1.** An active pixel sensor circuit, comprising:

a plurality of exposable pixel cells (4,12) arranged in an array (5) and configured to provide an output signal representative of incident light to which said array is exposed;
a reference signal generating circuit (3) including at least a first reference pixel cell (30), said reference circuit outputting a reference signal that is indicative at least in part of a voltage on the photo diode (32) of the reference pixel cell; and
wherein comparison of said reference signal with said array output signal reduces noise and parasitic influences in said array output signal.

**2.** The circuit of claim 1, wherein said reference pixel cell is formed in a manner similar to each of said plurality of exposable pixel cells (12).

**3.** The circuit of claim 1, wherein said reference pixel cell (30) is formed other than in said exposable array (4).

**4.** The circuit of claim 1, wherein said reference circuit includes a plurality of reference pixel cells (20,30,40) and outputs a reference signal that is indicative at least in part of an average voltage on some of the photo diodes of that plurality of reference pixel cells (20,30,40).

**5.** The circuit of claim 1, wherein said array (4) includes a plurality of rows (1,2) and said reference circuit (3) include at least one reference pixel for each of said rows.

6. The circuit of claim 5, wherein said reference circuit (3) includes a plurality of reference pixels for each of said rows.

7. The circuit of claim 6, wherein the plurality of reference pixels (20,30,40) in each row (1,2) have their photo diodes tied together.

8. The circuit of claim 7, wherein the plurality of tied together photo diodes (120-122) and their interconnecting members (124-125) are formed integrally.

9. A method of operating an APS circuit, comprising the steps of:

providing an array of pixel cells having a first portion and a second portion;
producing an output signal representative of incident light to which said first portion is exposed; and
generating a reference signal for said output signal from at least a first reference pixel cell formed in said second portion of said array.

10. The method of claim 9, further comprising the steps of:
generating said reference signal from a plurality of reference pixel cells and in such a manner as to reflect at least in part an average value of photo diode output voltages for said plurality of reference pixel cells.

# Fig. 1

ROW

RESET

COL

VDD

13

14

17

15

19

11

12

# Fig. 3

124

125

| PHOTO DIODE 120 | BR | PHOTO DIODE 121 | BR | PHOTO DIODE 122 | ••• |

PIXEL TRANS. 117

PIXEL TRANS. 118

•••

113

115

RST

VDD

COL

114

ROW

111

112

110

Fig. 2

COLUMN
AMPLIFIERS

REFERENCE
SIGNAL

COLUMN(N)
OUTPUT

MUX

EP 1 117 250 A2